(19) Europäisches Patentamt / European Patent Office / Office européen des brevets

(11) **EP 3 214 305 A1**

(12) **EUROPEAN PATENT APPLICATION**

(43) Date of publication:
06.09.2017 Bulletin 2017/36

(51) Int Cl.:
*F03D 7/02* (2006.01)  *F03D 7/04* (2006.01)

(21) Application number: 17159113.4

(22) Date of filing: 03.03.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 04.03.2016 JP 2016041709

(71) Applicant: Hitachi, Ltd.
Chiyoda-ku,
Tokyo 100-8280 (JP)

(72) Inventors:
• KONDO, Shinichi
Tokyo, 100-8280 (JP)

• WATANABE, Masahiro
Tokyo, 100-8280 (JP)
• NAKATANI, Masachika
Tokyo, 100-8280 (JP)
• SAKAMOTO, Kiyoshi
Tokyo, 100-8280 (JP)
• SAEKI, Mitsuru
Tokyo, 100-8280 (JP)

(74) Representative: MERH-IP Matias Erny Reichl
Hoffmann
Patentanwälte PartG mbB
Paul-Heyse-Strasse 29
80336 München (DE)

(54) **CONTROL DEVICE OF PLURALITY OF WIND TURBINES AND CONTROL METHOD OF WIND FARM OR PLURALITY OF WIND TURBINES**

(57)    An object is to provide a control device or a control method that is capable of increasing a power generation output in a wind farm, or a wind farm that is capable of increasing a power generation output.

A control device that controls a plurality of wind turbines, includes a calculation device (32) that calculates a yaw command value of each wind power generation device (10) so that a sum of power generation outputs of the wind turbines respectively is increased by using wind condition information that excludes an influence of turbulence by a wind power generation device of upwind; and a communication unit (40) that outputs the yaw command value to at least a part of the wind turbines.

FIG. 1

**Description**

BACKGROUND OF THE INVENTION

FIELD OF THE INVENTION

The present invention relates to a control device of a plurality of wind turbines and a control method of a wind farm or a plurality of wind turbines.

BACKGROUND ART

Depletion of fossil fuel such as petroleum has been worried for a long period of time and in order to prepare a countermeasure of global warming, reduction of $CO_2$ emission is an urgent task to be solved worldwide. In order to solve these problems, as a method for generating power without using the fossil fuel and without emitting $CO_2$, introduction of power generation using natural energy such as solar power generation and wind power generation is rapidly progressing all over the world.

Therefore, a wind power generation device group (wind farm) configured of two or more wind turbines is also increased. As an introduction amount of the wind power generation device is increased and it is required to play a role as a backbone power supply, it is desired to improve a power generation output of an entire wind farm. However, when installing the wind farm, since there is a restriction on a site area or the like, it is impossible to install the wind turbines sufficiently away from each other and a distance between the wind turbines often decreases to some extent. In a case where the distance between the wind turbines is sufficiently long, it is unnecessary to consider an influence of a rear flow passing through the wind power generation device of upwind, but in a case where the distance between the wind turbines decreases to some extent, in the wind power generation device of downwind, the influence of the rear flow passing through the wind power generation device of the upwind is received, and thereby the power generation output is lowered.

Here, in JP-T-2010-526963, a method of setting operation parameters of the wind power generation device such that the power generation output is maximized based on a wind speed ratio of a plurality of wind turbines, has been proposed.

Since the rear flow passing through the wind power generation device includes a turbulent component which receives an influence of rotating blades of the wind power generation device, a wind direction that is measured by the wind power generation device of the downwind includes an error by receiving an influence of turbulence, and thus the wind power generation device may not be necessarily optimally controlled based thereon.

Among them, there is a concern that a yaw angle is shifted from a true wind direction of the wind power generation device of the downwind. For example, in a case where the yaw angle is deviated even at the same wind speed, there is a report that an obtained power generation output is decreased. Therefore, even if the operation parameters of the wind power generation device are set based on the wind speed ratio of the plurality of wind turbines, it is conceivable that the power generation output does not become maximum due to the error of the yaw angle.

SUMMARY OF THE INVENTION

In view of the above points, an object of the invention is to provide a control device or a control method that is capable of increasing a power generation output in a wind farm, or a wind farm that is capable of increasing a power generation output.

In order to solve the problem described above, according to an aspect of the present invention, there is provided a control device that controls a plurality of wind turbines, the control device includes a calculation device that calculates a yaw command value of each wind power generation device so that a sum of power generation outputs of the wind turbines respectively is increased by using wind condition information that excludes an influence of turbulence by a wind power generation device of upwind; and/or a communication unit that outputs the yaw command value to at least a part of the wind turbines.

According to another aspect of the present invention, there is provided a wind farm including the control device described above; and a plurality of wind turbines that are controlled by the control device.

According to still another aspect of the present invention, there is provided a control method of a plurality of wind turbines, the method including determining a yaw command value of each wind power generation device so that a sum of power generation outputs of the wind turbines respectively is increased by using wind condition information that excludes an influence of turbulence according to a wind power generation device of upwind; and/or controlling each wind power generation device based on the determined yaw command value.

According to the invention, it is possible to provide the control device or the control method that capable of increasing the power generation output in the wind farm, or to provide the wind farm that is capable of increasing the power generation output by appropriately controlling operation parameters of each wind power generation device of the wind farm.

BRIEF DESCRIPTION OF THE DRAWINGS

Fig. 1 is a view illustrating a configuration of a wind power generation device in a first example of the invention.
Fig. 2 is a view illustrating that a turbulence included in a rear flow passing through the wind power generation device in the first example of the invention generates an error in a wind direction measurement value of a wind power generation device of downwind.

Fig. 3 is a graph illustrating an example of a characteristic in which a power generation output is reduced by an error of a yaw angle of the wind power generation device in the first example of the invention.

Fig. 4 is a view illustrating a configuration of a wind farm in the first example of the invention.

Fig. 5 is a diagram illustrating a function configuration of a control device of the wind farm in the first example of the invention.

Figs. 6A and 6B are diagrams explaining a determining method of a wind direction that excludes an influence of turbulence in the first example of the invention.

Fig. 7 is a diagram explaining the determining method of the wind direction that excludes the influence of turbulence in the first example of the invention.

Fig. 8 is a graph illustrating an effect of preventing the power generation output from lowering in the first example of the invention.

Figs. 9A and 9B are diagrams describing a determining method of a wind direction that excludes an influence of turbulence in a second example of the invention.

Fig. 10 is a view explaining a determining method of a wind direction that excludes an influence of turbulence in a third example of the invention.

Fig. 11 is a view describing a determining method of a wind direction that excludes an influence of turbulence in a fourth example of the invention.

Fig. 12 is a view illustrating a configuration of a wind farm in a fifth example of the invention.

Fig. 13 is a view illustrating an example of a command method of a yaw angle of a wind power generation device in a sixth example of the invention.

Fig. 14 is a view illustrating an example of a command method of a yaw angle of a wind power generation device in a seventh example of the invention.

Fig. 15 is a view illustrating a configuration of a wind farm in an eighth example of the invention.

Fig. 16 is a diagram illustrating a function configuration of a wind farm control device in the eighth example of the invention.

Fig. 17 is a graph illustrating a relationship between a wind speed and a power generation output in a case where a pitch angle of a wind power generation device in the eighth example of the invention is controlled.

Fig. 18 is a view illustrating an example of a command method of a yaw angle and a pitch angle of the wind power generation device in the eighth example of the invention.

Fig. 19 is a graph illustrating an effect of an improvement of the power generation output in the eighth example of the invention.

DETAILED DESCRIPTION OF THE INVENTION

Hereinafter, preferred examples for carrying out the invention will be described with reference to the drawings. In addition, it should be noted that the followings are merely examples and are not intended to limit the subject of application of the invention to the following specific examples.

First Example

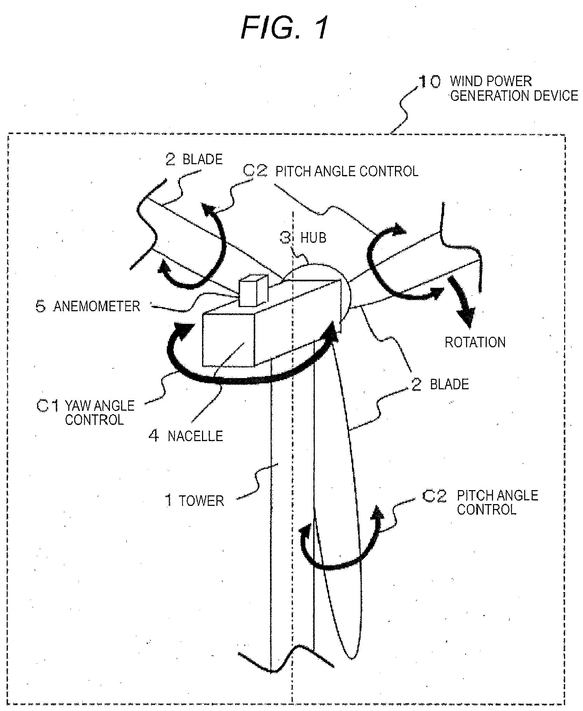

Fig. 1 is a view illustrating a configuration of a wind power generation device 10 in the example. As illustrated in the drawing, blades 2 rotate a hub 3 using a force of wind, the rotation of the hub 3 is transmitted to a main shaft and a speed increasing machine (not illustrated) on an inside of a nacelle 4, rotates a power generator (not illustrated), and generates electric power. The nacelle 4 rotatably supports the hub 3 and the blades 2 via the main shaft.

The blades 2 are provided in a state of being capable of varying a pitch angle. It is possible to adjust energy receiving from wind by the blades 2 by varying the pitch angle using a pitch angle control C2.

The nacelle 4 houses the main shaft, the speed increasing machine, and the power generator, and has a structure for supporting these units. The nacelle 4 is rotatably supported in a horizontal plane by a tower 1.

The nacelle 4 is provided in a state of being capable of varying a yaw angle in a horizontal direction. It is possible to adjust energy receiving from wind by the blades 2 by varying the yaw angle using a yaw angle control C1.

An anemometer 5 is provided on the nacelle. The pitch angle and the yaw angle are usually controlled based on a wind direction and a wind speed value that are measured by the anemometer 5 provided the nacelle.

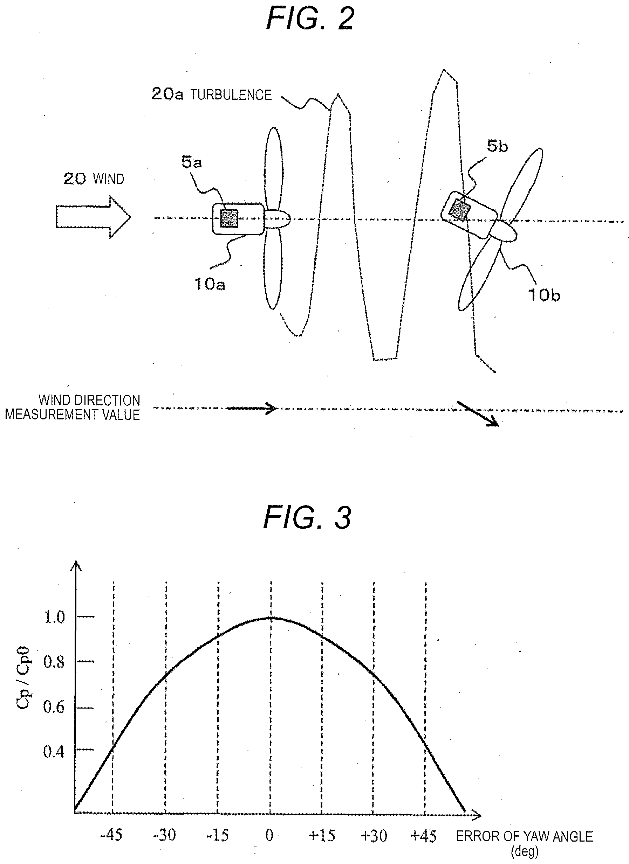

Fig. 2 is an image view illustrating that turbulence 20a included in a rear flow passing through a wind power generation device 10a generates an error in a wind direction measurement value 5b of a wind power generation device 10b of downwind in the example. As illustrated in Fig. 2, the rear flow passing through the wind power generation device 10a of upwind includes the turbulence 20a generated by an influence of the rotating blades and reaches the wind power generation device 10b of the downwind. In the wind power generation device 10b of the downwind, the wind direction that is measured by the anemometer 5 provided in the nacelle includes an error with respect to a true wind direction 20 by the turbulence and a direction of the nacelle of the wind power generation device 10b of the downwind, which controls the yaw angle based on the wind direction measurement value, is shifted with respect to the true wind direction. Here, in "Rotor Blade Sectional Performance Under Yawed Inflow Conditions", Journal of Solar Energy Engineering, 2008, it is pointed out that when the yaw angle is shifted, the power generation output that is obtained is lowered even at the same wind speed. Therefore, even if the operation parameters of the wind power generation device are set based on the wind speed ratio of the plurality of wind turbines, the power generation output may not be increased as expected by the error of the yaw angle.

Fig. 3 is a graph illustrating an example of a characteristic in which the power generation output of the wind power generation device is reduced by the error of the yaw angle with respect to the wind direction. In Fig. 3, in a case of 0 deg, the error of the yaw angle of a horizontal axis is in a state where the error does not exist with respect to the wind direction. A vertical axis indicates a ratio of a windmill power coefficient Cp when a windmill power coefficient Cp0 is 1 in the error of the yaw angle of 0 deg. Here, a power generation output P of the wind power generation device is expressed by Equation (1).

$$P = Cp \times (1/2) \times \rho \times A \times V^3 \quad \cdots \quad (1)$$

Here, Cp indicates the windmill power coefficient, ρ indicates an air density, A indicates a wind receiving area, and V indicates the wind speed. From Equation (1), the power generation output P is proportional to Cp under conditions where ρ, A, and V are constant. Therefore, if Cp decreases due to the error of the yaw angle, it is understood that the power generation output decreases.

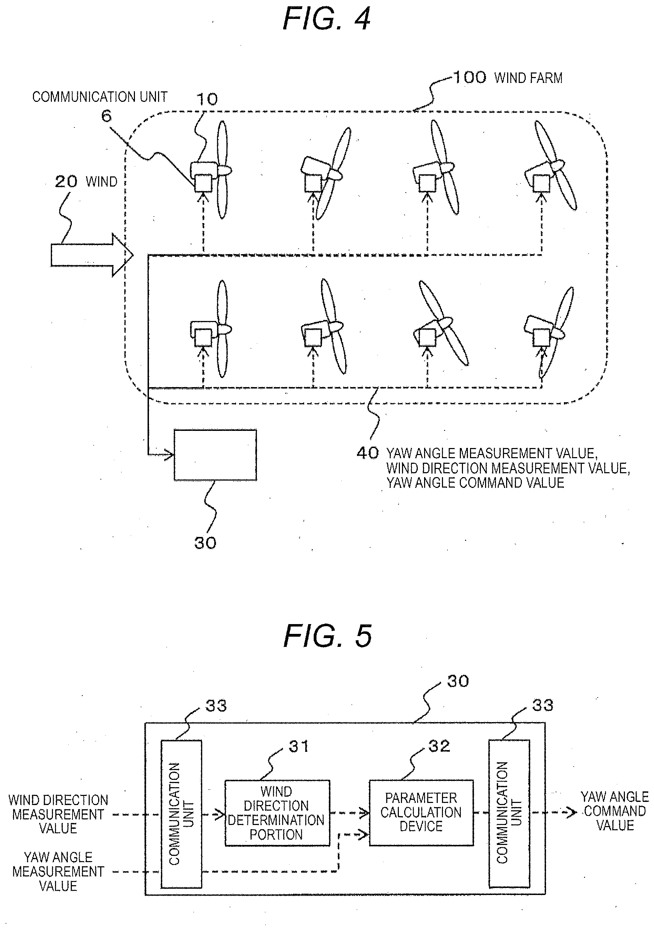

Fig. 4 is a view illustrating a configuration of a wind farm 100 in the example. In Fig. 4, each wind power generation device 10 and a wind farm control device 30 are connected by a communication unit 40. As data transmitted by the communication unit 40, for example, a yaw angle measurement value, a wind direction measurement value, and the yaw angle command value are included. Wind direction and wind speed information and the yaw angle measurement value measured by each wind power generation device 10 are transmitted from each wind power generation device 10 to the wind farm control device 30 via a wind turbine side communication unit 6 (not illustrated in the following drawings). In addition, the yaw angle command value is transmitted from the wind farm control device 30 to each wind power generation device 10. The error of the yaw angle generated by each wind power generation device 10 is corrected and it is possible to prevent a decrease in the power generation output by such a configuration.

Fig. 5 is a diagram of a function configuration of the wind farm control device 30 in the example. The wind farm control device 30 includes a parameter calculation device 32 as a processor for calculating parameters. Furthermore, a control device-side communication units 33, which receives a signal such as the wind direction measurement value or the yaw angle measurement value via the communication unit 40, or transmits the parameter signal such as the calculated yaw angle command value, is provided between the respectively. The corresponding wind turbine-side communication unit 6 is included in each wind power generation device. The control device-side communication unit 33 outputs the yaw angle command value to all the wind turbines of control targets. The wind direction measurement value and the yaw angle measurement value measured by each wind power generation device are input into the control device-side communication unit 33 and the wind direction that excludes the influence of turbulence is determined by a wind direction determination portion 31. The parameter calculation device 32 calculates the parameters of each wind power generation device so that a sum of the power generation outputs of the wind farm is maximized by using the wind direction that excludes the influence of turbulence and the yaw angle measurement value of each wind power generation device. In the example, the yaw angle command value alone of each wind power generation device is used as the parameter. In addition, in the example, the parameter calculation is performed so that the sum of the power generation outputs of the wind farm is maximized, but it may be good if the sum of the power generation outputs of the wind farm becomes larger than at least before the control is introduced.

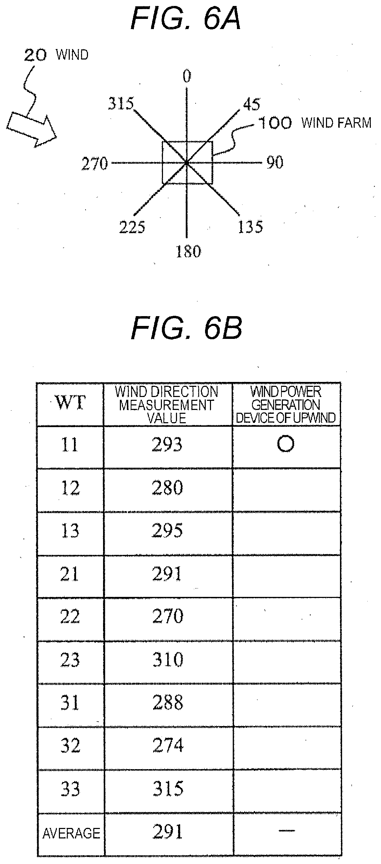

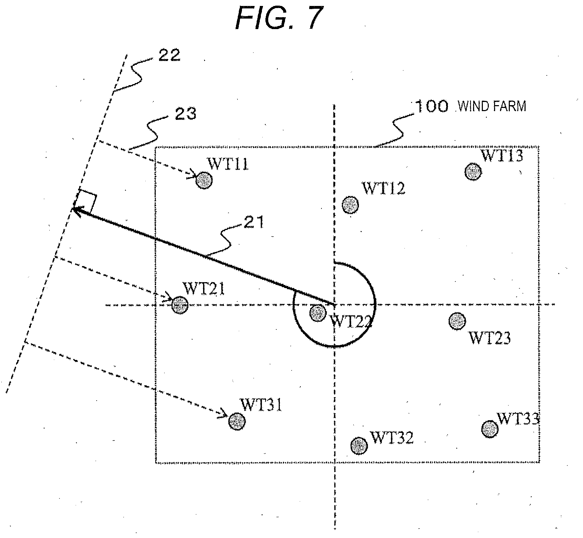

Figs. 6A, 6B, and 7 are diagrams describing a determining method of the wind direction that excludes the influence of turbulence in the example. As illustrated in Fig. 6A, azimuths are defined from the wind farm 100 and as illustrated in Fig. 6B, the wind directions that are measured by each of the wind turbines WT11 to WT33 of the wind farm configured of nine wind turbines are indicated as values defined in Fig. 6A, and an average value thereof is obtained.

Next, an example of how to determine the wind power generation device of the upwind is described by using Fig. 7. In Fig. 7, a wind power generation device of which a length of a line segment 23 drawn parallel to an average wind direction with respect to each wind power generation device is the shortest is defined as the wind power generation device of the most upwind by using an auxiliary line 22 drawn vertically to the average wind direction from the outside of a direction 21 of the average wind direction of the wind farm obtained in Fig. 6B. The wind direction measurement value that is obtained by the wind power generation device of the upwind is the wind direction that excludes the influence of turbulence.

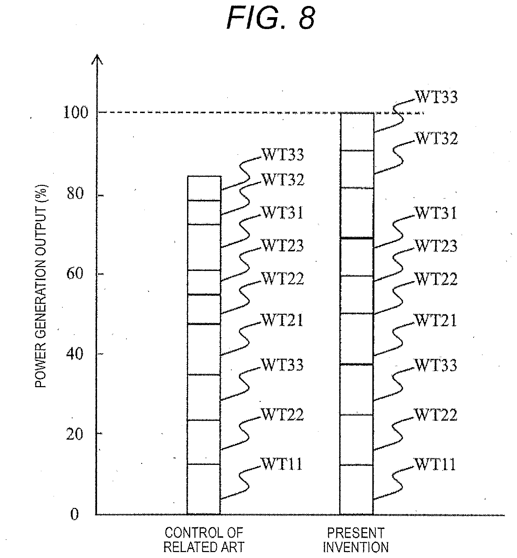

Fig. 8 is a graph illustrating an effect of preventing the power generation output from lowering in the example. In a case of the arrangement of the wind turbines as illustrated in Fig. 7, in the control of the related art, an error occurs in the control of the yaw angle of the wind power generation device of the downwind and the power generation output is lowered by the turbulence of the wind passing through the wind power generation device of the upwind. In the example, since it is possible to correct the error of the yaw angle without being affected by the turbulence, lowering of the power generation output of the wind power generation device of the downwind is prevented and a sum output of all the wind farms is improved.

Second Example

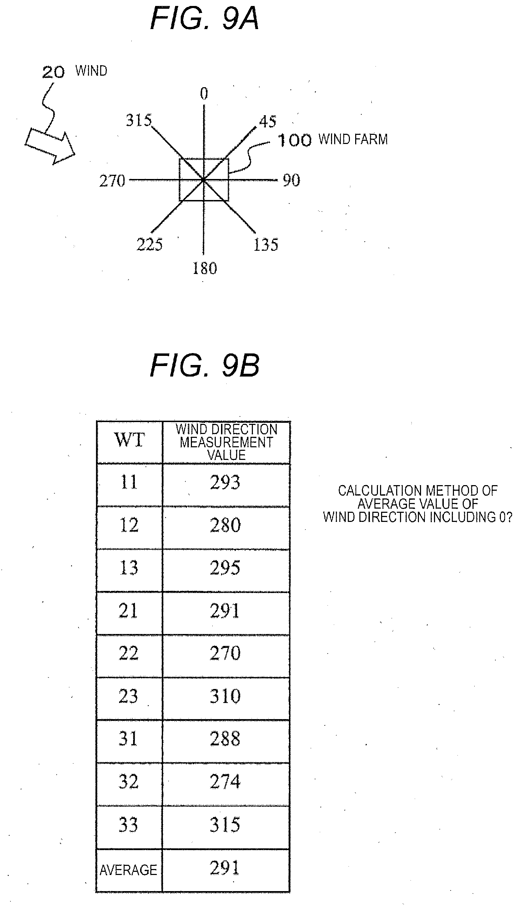

Figs. 9A and 9B illustrate an example to which another determining method of a wind direction that excludes an influence of turbulence is applied in the first example. As illustrated in Fig. 9A, azimuths are defined from the wind farm 100 and as illustrated in Fig. 9B, the wind directions that are measured by each of the wind turbines WT11 to WT33 of the wind farm configured of nine wind turbines are indicated as values defined in Fig. 9A, and an average value thereof is the wind direction that excludes the influence of turbulence. As for the average value, those calculated outside the wind farm control device 30 may be input into the wind farm control device 30, or the measurement value of the wind direction from each wind power generation device is input into the wind farm control device 30 and thereby the average value may be calculated within the wind farm control device 30.

Third Example

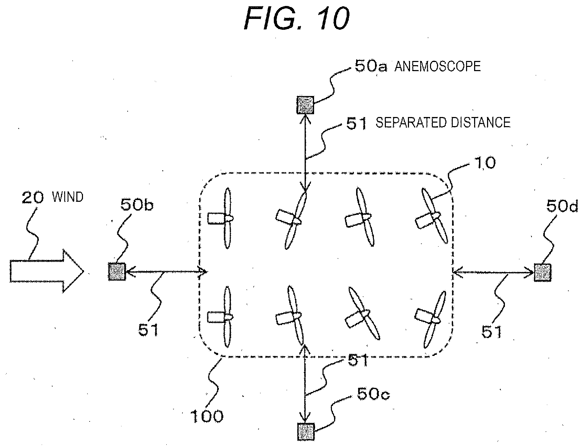

Fig. 10 is an example to which another determining method of a wind direction that excludes an influence of turbulence is applied in the first example. Anemoscopes 50 are installed one or more (50a, 50b, 50c, and 50d) that are installed with a certain separated distance 51 or more that is not affected by the turbulence on the outside more than the wind power generation device 10 that is positioned on the outermost position of the wind farm 100. The wind direction measurement values of the anemoscopes are the wind directions that exclude the influence of turbulence. Here, it is preferable that a certain separated distance or more is ten times a rotor diameter of the wind power generation device. The influence of turbulence may be excluded by separating such a distance.

Fourth Example

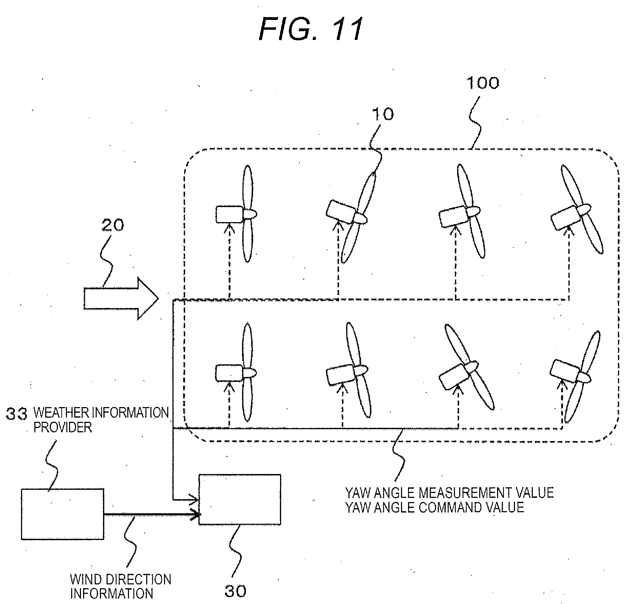

Fig. 11 is an example to which another determining method of a wind direction that excludes an influence of turbulence is applied in the first example. In the example, a wind direction provided by a weather information provider 33 on the outside of the wind farm 100 is the wind direction that excludes the influence of turbulence. Here, since the weather information provider 33 provides a representative wind direction of a region including the wind farm, the wind direction that does not include the influence of turbulence due to the wind power generation device is obtained.

Moreover, the determining methods of the wind direction that excludes the influence of turbulence illustrated in the first example to the fourth example may be used by combining two kinds or more. In this case, it is possible to take the average value of the wind direction that excludes the influence of turbulence obtained by each method or add the values together by multiplying a predetermined weight according to reliability.

Fifth Example

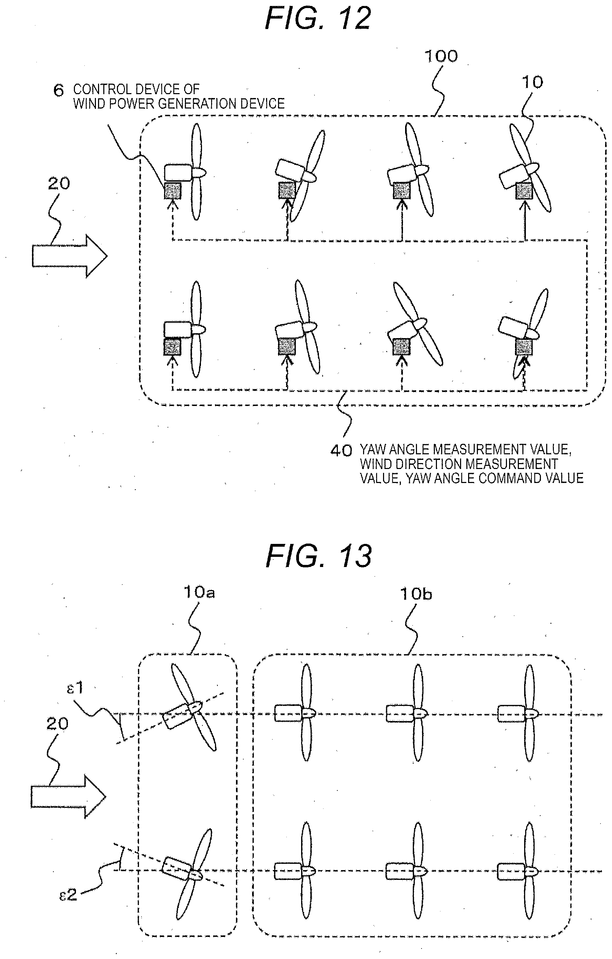

Fig. 12 is a view illustrating a system configuration of an example in which the wind farm control device is not used in the first example. Specifically, in each example described above, the control device of the wind farm is provided separately from each wind power generation device, but the wind farm control device of the example has the same function as that of the control device mounted on the wind power generation device. In each example described above, since the control device of the wind farm is provided independently of the control device of any wind power generation device, the control device-side communication unit outputs the yaw angle command value to all the wind turbines of the control targets. On the other hand, in the example, since the command value can be directly output to the wind power generation device on which the control device is mounted, the control device-side communication unit may communicate with a part of the wind turbines other than the wind power generation device on which the control device is mounted.

Each wind power generation device 10 is provided with a control device 6 that controls the pitch angle and the yaw angle of the wind power generation device, and the like. The wind turbines within the wind farm are connected to each other by the communication unit 40 and the at least one of the control devices transmits the yaw angle command value to the control device of each wind power generation device based on the wind direction that excludes the influence of turbulence.

Sixth Example

Fig. 13 is a view illustrating an example of a command method of a yaw angle with respect to each wind power generation device 10 in the first example. The yaw angle command value of the wind power generation device 10a positioned in the upwind with respect to the wind direction 20 that excludes the influence of turbulence is changed by $\varepsilon 1$ and $\varepsilon 2$ different from the yaw angle in which the power generation output is maximized with respect to the wind direction 20. The wind power generation device 10b of the downwind is the yaw angle in which the power generation output is maximized with respect to the wind direction 20. Therefore, as illustrated in Fig. 3, the windmill power coefficient of the wind power generation device 10a is lowered, but attenuation of the wind speed transmitted to the wind power generation device 10b of the downwind is suppressed. Therefore, the sum power generation output of the wind farm can be maximized. The values of $\varepsilon 1$ and $\varepsilon 2$ of the wind power generation device 10a of the upwind, and the number of rows of the wind power generation device 10b of the downwind are determined by a table based on an actual value, an optimization calculation, or the like.

Seventh Example

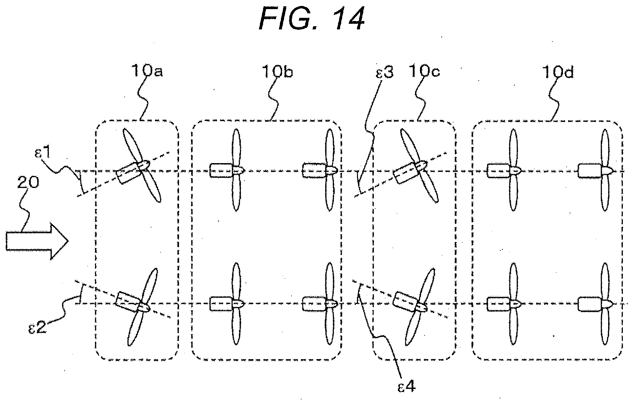

Fig. 14 is a view of an example different from the sixth example illustrating a command method of the yaw angle with respect to each wind power generation device 10 in the first example. A difference from Fig. 13 is that a yaw angle command value of a wind power generation device 10c that is positioned in the downwind more than the wind power generation device 10b that is positioned in the downwind with respect to the wind power generation device 10a that is positioned in the most upwind is changed by $\varepsilon 3$ and $\varepsilon 4$ different from the yaw angle in which the power generation output is maximized with respect to the wind direction 20. The wind power generation device 10c is positioned in the downwind with respect to the wind power generation device 10a or the wind power generation device 10b, but is a wind power generation device of the upwind when viewed from a wind power generation device 10d. Therefore, in the wind speed that is attenuated by passing through the wind power generation device 10b, the windmill power coefficient of the wind power generation device 10c is lowered and attenuation of the wind speed that is transmitted to the wind power generation device 10d of further downwind is suppressed. Therefore, the sum power generation output of the wind farm can be maximized. The values of $\varepsilon 1$, $\varepsilon 2$, $\varepsilon 3$, and $\varepsilon 4$ of the wind turbines 10a and 10c of the upwind, and the number of rows of the wind turbines 10b and 10c of the downwind are determined by a table based on an actual value, an optimization calculation, or the like. The yaw angle command value (or it is possible to apply to the pitch angle command value) in the wind power generation device of the upwind is changed from the command value in which the power generation output is maximized and thereby it is possible to optimize the entire power generation outputs. In this case, as described in the example, the wind power generation device of the upwind is not necessarily the wind power generation device of the most upwind. As an example, the wind power generation device of the upwind can be set as the upwind $\Rightarrow$ the downwind $\Rightarrow$ the upwind $\Rightarrow$ the downwind.

Eighth Example

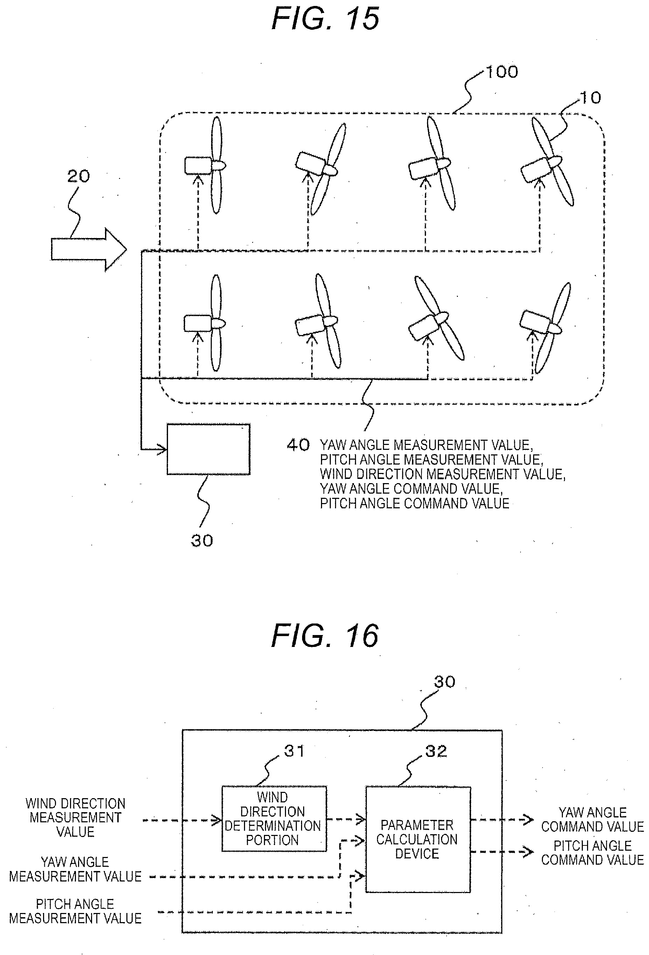

Fig. 15 is a view illustrating a configuration of a wind farm in the example. A difference from Fig. 4 is that wind direction and wind speed information, measurement values of the yaw angle and the pitch angle that are measured by each wind power generation device are transmitted from each wind power generation device 10 to the wind farm control device 30. In addition, the command values of the yaw angle and the pitch angle are transmitted from the control device of the wind farm to each wind power generation device. An error of the yaw angle generated in each wind power generation device is corrected, lowering of the power generation output is prevented, and the pitch angle of each wind power generation device is controlled by such a configuration. Therefore, the sum power generation output of the wind farm can be further improved with respect to the first example.

Fig. 16 is a diagram of a function configuration of a wind farm control device 30 in the example. The wind direction measurement value, the yaw angle measurement value, and the pitch angle measurement value measured by each wind power generation device are input into a parameter calculation device 32 and the wind direction that excludes the influence of turbulence is determined by a wind direction determination portion 31. The parameter calculation device 32 calculates the parameters of each wind power generation device so that a sum of the power generation outputs of the wind farm is maximized by using the wind direction that excludes the influence of turbulence and, the yaw angle measurement value and the pitch angle measurement value of each wind power generation device. In the example, the yaw angle command value and the pitch angle command value of each wind power generation device are used as the parameters.

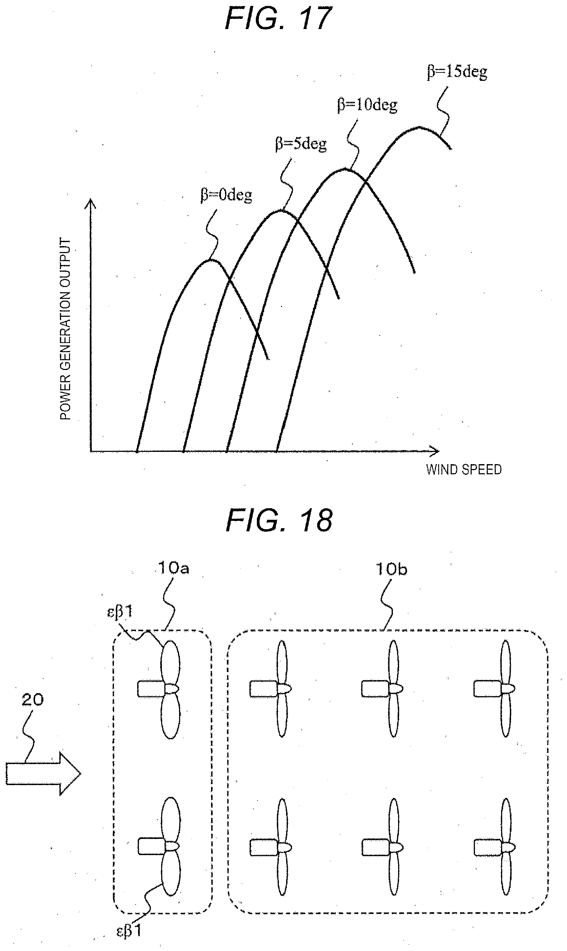

Fig. 17 is a graph illustrating a relationship between a wind speed and a power generation output in a case where the pitch angle of the wind power generation device is controlled in the example. As illustrated in Fig. 17, if a pitch angle $\beta$ is changed, a power generation output is changed even in the same wind speed. The pitch angle of at least one or more of the wind turbines of the wind farm is changed from a value in which the wind power generation device obtains the maximum output by using the characteristic. Therefore, the power generation output of the wind power generation device of the downwind from the wind power generation device increases and it is possible to increase a sum output of the wind farm.

Fig. 18 is a view illustrating an example of a command method of the yaw angle and the pitch angle with respect to each wind power generation device 10 in the example. The yaw angle command value of all the wind turbines with respect to the wind direction 20 that excludes the influence of turbulence is a yaw angle in which the power generation output is maximized with respect to the wind direction 20. The pitch angle command value of the wind power generation device 10a that is positioned in the upwind is changed by $\varepsilon\beta 1$ on a feather side from the pitch angle in which the power generation output is maximized with respect to the wind direction 20. The wind power generation device 10b of the downwind is the pitch angle in which the power generation output is maximized with respect to the wind direction 20. Therefore, as illustrated in Fig. 17, the power generation output of the wind power generation device 10a is prevented from lowering and attenuation of the wind speed transmitted to the wind power generation device 10b of the downwind is suppressed. Therefore, as a whole, it is possible to maximize the sum power generation output of the wind farm. The value of $\varepsilon\beta 1$ of the

wind power generation device 10a and the number of rows of the wind power generation device 10b are determined by a table based on an actual value, an optimization calculation, or the like.

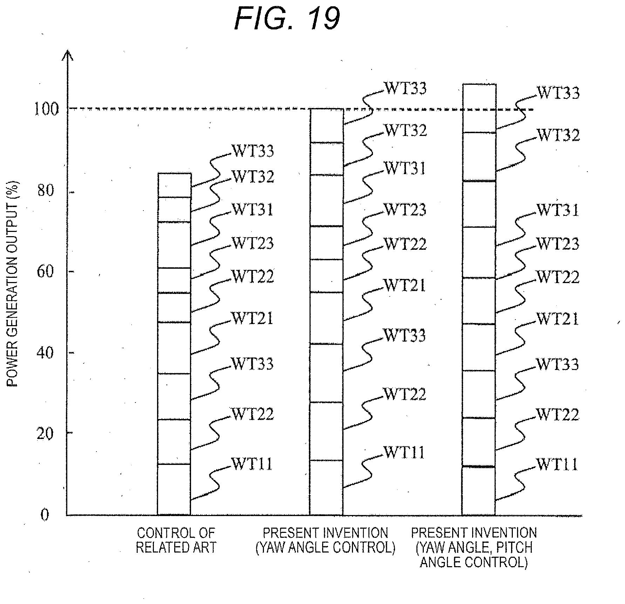

Fig. 19 is a graph illustrating an effect of an improvement of a power generation output in the example. In a case where the yaw angle and the pitch angle of the example are controlled, the pitch angle of the wind power generation device of the upwind is changed and the power generation outputs of the plurality of wind turbines of the downwind are increased, and thereby it is possible to increase the sum power generation output of the wind farm compared to a case of an arrangement of the wind turbines illustrated in Fig. 7 and a case of the yaw angle control of Fig. 8.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A control device that controls a plurality of wind turbines, the control device comprising:

   a calculation device (32) that calculates a yaw command value of each wind power generation device (10) so that a sum of power generation outputs of the wind turbines respectively is increased by using wind condition information that excludes an influence of turbulence by the wind power generation device (10) of upwind; and
   a communication unit (40) that outputs the yaw command value to at least a part of the wind turbines.

2. The control device according to claim 1, wherein the calculation device (32) calculates the yaw command value of each wind power generation device (10) so that the sum of the power generation outputs of the wind turbines respectively is maximized.

3. The control device according to claim 1 or 2, wherein the yaw command value in the wind power generation device (10) of the upwind is changed from a yaw command value in which the power generation output is maximized under the wind condition information that excludes the influence of turbulence.

4. The control device according to any one of claims 1 to 3,

wherein a pitch angle command value of a blade in each wind power generation device (10) is calculated.

5. The control device according to claim 4, wherein the yaw command value of each wind power generation device (10) is set as a yaw command value in which the power generation output is maximized according to the wind condition information and a pitch angle command value in the wind power generation device (10) of the upwind among the pitch angle command values is set as a pitch angle command value on a feather side more than the pitch angle command value in which the power generation output is maximized according to the wind condition information.

6. The control device according to any one of claims 1 to 5,

wherein the wind condition information that excludes the influence of turbulence uses wind condition information that is obtained in a wind power generation device (10) of the most upwind among the wind turbines.

7. The control device according to any one of claims 1 to 6,

wherein the wind condition information that excludes the influence of turbulence uses an average value of wind condition information that is obtained by the plurality of wind turbines.

8. The control device according to any one of claims 1 to 7,

wherein the wind condition information that excludes the influence of turbulence uses the wind direction that is measured by a wind direction measurement unit that is disposed on an outside of each wind power generation device (10).

9. The control device according to any one of claims 1 to 8,

wherein the wind condition information that excludes the influence of turbulence uses weather information that is supplied from a weather information provider.

10. A wind farm comprising:

    the control device according to any one of claims 1 to 9; and
    a plurality of wind turbines that are controlled by the control device.

11. A control method of a plurality of wind turbines, the method comprising:

    determining a yaw command value of each wind power generation device (10) so that a sum of power generation outputs of the wind turbines respectively is increased by using wind condition information that excludes an influence of turbulence according to a wind power generation device (10) of upwind; and
controlling each wind power generation device (10) based on the determined yaw command value.

**12.** The control method according to claim 11, wherein the yaw command value in the wind power generation device (10) of the upwind is changed from a yaw command value in which the power generation output is maximized under the wind condition information that excludes the influence of turbulence.

**13.** The control method according to claim 11, wherein the yaw command value of each wind power generation device (10) of a control target is set as a yaw command value in which the power generation output is maximized according to the wind condition information and a pitch angle command value in the wind power generation device (10) of the upwind among the pitch angle command values of blades of each wind power generation device is changed to a feather side more than the pitch angle command value in which the power generation output is maximized according to the wind condition information.

## FIG. 1

10 WIND POWER GENERATION DEVICE

2 BLADE

C2 PITCH ANGLE CONTROL

3 HUB

5 ANEMOMETER

ROTATION

C1 YAW ANGLE CONTROL

2 BLADE

4 NACELLE

1 TOWER

C2 PITCH ANGLE CONTROL

## FIG. 2

20a TURBULENCE

5b

5a

20 WIND

10a

10b

WIND DIRECTION
MEASUREMENT VALUE

## FIG. 3

Cp / Cp0

1.0

0.8

0.6

0.4

-45   -30   -15   0   +15   +30   +45   ERROR OF YAW ANGLE
(deg)

## FIG. 4

100 WIND FARM

COMMUNICATION UNIT   10

6

20 WIND

40 YAW ANGLE MEASUREMENT VALUE,
WIND DIRECTION MEASUREMENT VALUE,
YAW ANGLE COMMAND VALUE

30

## FIG. 5

30

33                                                    33

31                          32

WIND DIRECTION
MEASUREMENT
VALUE

COMMUNICATION
UNIT

WIND
DIRECTION
DETERMINATION
PORTION

PARAMETER
CALCULATION
DEVICE

COMMUNICATION
UNIT

YAW ANGLE
COMMAND
VALUE

YAW ANGLE
MEASUREMENT
VALUE

# FIG. 6A

20 WIND

0

315    45
    100 WIND FARM
270 ———— 90

225    135

180

# FIG. 6B

| WT | WIND DIRECTION MEASUREMENT VALUE | WIND POWER GENERATION DEVICE OF UPWIND |
|---|---|---|
| 11 | 293 | O |
| 12 | 280 | |
| 13 | 295 | |
| 21 | 291 | |
| 22 | 270 | |
| 23 | 310 | |
| 31 | 288 | |
| 32 | 274 | |
| 33 | 315 | |
| AVERAGE | 291 | — |

# FIG. 7

# FIG. 8

# FIG. 9A

20 WIND

0
315     45
100 WIND FARM
270 ——— 90
225     135
180

# FIG. 9B

| WT | WIND DIRECTION MEASUREMENT VALUE |
|---|---|
| 11 | 293 |
| 12 | 280 |
| 13 | 295 |
| 21 | 291 |
| 22 | 270 |
| 23 | 310 |
| 31 | 288 |
| 32 | 274 |
| 33 | 315 |
| AVERAGE | 291 |

CALCULATION METHOD OF
AVERAGE VALUE OF
WIND DIRECTION INCLUDING 0?

# FIG. 10

# FIG. 11

WEATHER INFORMATION
PROVIDER

YAW ANGLE MEASUREMENT VALUE
YAW ANGLE COMMAND VALUE

WIND DIRECTION
INFORMATION

## FIG. 12

6 CONTROL DEVICE OF
WIND POWER GENERATION DEVICE

100

10

20

40 YAW ANGLE MEASUREMENT VALUE,
WIND DIRECTION MEASUREMENT
VALUE, YAW ANGLE COMMAND VALUE

## FIG. 13

10a

10b

ε1

20

ε2

EP 3 214 305 A1

# FIG. 14

19

# FIG. 15

40 YAW ANGLE MEASUREMENT VALUE,
PITCH ANGLE MEASUREMENT VALUE,
WIND DIRECTION MEASUREMENT VALUE,
YAW ANGLE COMMAND VALUE,
PITCH ANGLE COMMAND VALUE

# FIG. 16

# FIG. 17

# FIG. 18

# FIG. 19

Europäisches
Patentamt

European
Patent Office

Office européen
des brevets

# EUROPEAN SEARCH REPORT

Application Number

EP 17 15 9113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 685 094 A2 (RWE INNOGY GMBH [DE]) 15 January 2014 (2014-01-15) | 1,2,4,5, 8,10-13 | INV. F03D7/02 |
| Y | * paragraphs [0030] - [0048] * | 7 | F03D7/04 |
| X | EP 2 674 616 A2 (RWE INNOGY GMBH [DE]) 18 December 2013 (2013-12-18) * paragraphs [0039] - [0066]; figures 3-7 * | 1-5,8-13 | |
| X | KR 101 407 460 B1 (SAMSUNG HEAVY IND [KR]) 13 June 2014 (2014-06-13) * abstract; figures 1-5 * | 1,4,6, 10,11 | |
| X | JP 2007 285214 A (NABTESCO CORP) 1 November 2007 (2007-11-01) * abstract; figures 1-5 * * paragraphs [0017] - [0032] * | 1,4,6,8, 11 | |
| X | DE 10 2013 100515 A1 (LUCKS CHRISTOPH [DE]) 24 July 2014 (2014-07-24) * paragraphs [0019], [0038], [0042] * * paragraph [0047]; figure 5 * | 1,4,8, 10,11 | |
| Y | EP 2 267 297 A2 (FUJI HEAVY IND LTD [JP]) 29 December 2010 (2010-12-29) * paragraphs [0034] - [0043] * * paragraphs [0004] - [0007] * | 7 | TECHNICAL FIELDS SEARCHED (IPC) F03D |
| A | EP 2 667 022 A2 (SIEMENS AG [DE]) 27 November 2013 (2013-11-27) * paragraph [0024]; figure 11 * | 7 | |
| A | EP 2 757 255 A1 (ALSTOM WIND SLU [ES]) 23 July 2014 (2014-07-23) * abstract; figure 4 * * paragraphs [0006], [0009] * * paragraphs [0029] - [0036] * | 1,5,11, 13 | |

The present search report has been drawn up for all claims

| Place of search | Date of completion of the search | Examiner |
|---|---|---|
| The Hague | 29 June 2017 | Röttger, Klaus |

EPO FORM 1503 03.82 (P04C01)

## ANNEX TO THE EUROPEAN SEARCH REPORT
## ON EUROPEAN PATENT APPLICATION NO.

EP 17 15 9113

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2017

| Patent document cited in search report | | Publication date | Patent family member(s) | | Publication date |
|---|---|---|---|---|---|
| EP 2685094 | A2 | 15-01-2014 | DE 102012013591 A1<br>EP 2685094 A2 | | 16-01-2014<br>15-01-2014 |
| EP 2674616 | A2 | 18-12-2013 | DE 102012011357 A1<br>EP 2674616 A2 | | 12-12-2013<br>18-12-2013 |
| KR 101407460 | B1 | 13-06-2014 | NONE | | |
| JP 2007285214 | A | 01-11-2007 | NONE | | |
| DE 102013100515 | A1 | 24-07-2014 | NONE | | |
| EP 2267297 | A2 | 29-12-2010 | EP 2267297 A2<br>JP 5410172 B2<br>JP 2011007085 A | | 29-12-2010<br>05-02-2014<br>13-01-2011 |
| EP 2667022 | A2 | 27-11-2013 | EP 2667022 A2<br>US 2013317748 A1 | | 27-11-2013<br>28-11-2013 |
| EP 2757255 | A1 | 23-07-2014 | EP 2757255 A1<br>US 2014207297 A1 | | 23-07-2014<br>24-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010526963 T

**Non-patent literature cited in the description**

- Rotor Blade Sectional Performance Under Yawed Inflow Conditions. *Journal of Solar Energy Engineering,* 2008